# FASCICULE DE BREVET EUROPEEN

(11) **EP 3 772 433 B1**
(45) Date de publication et mention de la délivrance du brevet: **15.06.2022**
(21) Numéro de dépôt: 20189628.9
(22) Date de dépôt: 05.08.2020
(51) Int. Cl.: B60P 3/22

(54) **BRISE-LAMES D'UNE CITERNE POUR LE TRANSPORT DE PRODUITS LIQUIDES ET CITERNE ASSOCIÉE**
WELLENBRECHER EINES TANKS FÜR DEN TRANSPORT VON FLÜSSIGEN PRODUKTEN, UND ENTSPRECHENDER TANK
WAVE DEFLECTOR OF A TANK FOR TRANSPORTING LIQUID PRODUCTS AND ASSOCIATED TANK

(30) Priorité: 08.08.2019 FR 1909084
(43) Date de publication de la demande: 10.02.2021
(73) Titulaire: Etablissements MAGYAR, 21000 Dijon (FR)
(72) Inventeur: MAGYAR, Daniel, 75012 Paris (FR); MAGYAR, Laurent, 75001 Paris (FR)
(74) Mandataire: Cabinet Camus Lebkiri

(56) Documents cités:
- EP-A1- 2 058 245
- EP-A1- 3 505 395
- DE-U1-202013 102 562

## Description

### DOMAINE TECHNIQUE DE L'INVENTION

La présente invention se rapporte au domaine des citernes utilisées pour le stockage et le transport de produits liquides.

L'invention concerne plus particulièrement un brise-lames qui est un dispositif pour réduire les oscillations du produit stocké dans la citerne.

L'invention concerne également une citerne pour le stockage et le transport de produits liquides intégrant au moins une paire de brise-lames pour réduire les oscillations du produit stocké.

### ARRIERE-PLAN TECHNOLOGIQUE DE L'INVENTION

Les citernes utilisées pour le transport de produits liquides sont généralement équipées de brise-lames qui sont positionnés à l'intérieur de la cuve. Ils permettent en effet de réduire les oscillations, ou les effets de ballotement (« sloshing » en langue anglaise), du liquide stocké dans les citernes lors des différentes accélérations/décélérations dans l'espace de la citerne.

Les brise-lames sont généralement circulaires et de forme bombée et présentent au moins une ouverture, généralement centrale, pour permettre le passage du liquide de part et d'autre du brise-lames, le brise-lames autorisant le passage du liquide de part et d'autre du brise-lames tout en coupant l'effet de ballotement du liquide dans la cuve.

D'autre part, pour assurer une polyvalence des produits transportés (liquides alimentaires, liquides chimiques, hydrocarbures), les citernes doivent être régulièrement lavées, voire désinfectées. Pour assurer un lavage de grande efficacité, notamment pour les citernes transportant des produits alimentaires, il est connu de descendre dans la citerne, via des trous d'homme ou des orifices de visite de la cuve, des boules de lavage dont le jet nettoie l'intégralité de la surface interne sans laisser une zone « d'ombre » au jet.

Or, l'intégration de brise-lames dans la cuve peut complexifier cette opération de lavage.

Pour remédier à cet inconvénient, il a été proposé, dans le domaine des citernes métalliques, différentes solutions techniques de brise-lames métalliques avec des ouvertures centrales plus ou moins importantes. Le document EP2058245 présente plus particulièrement une architecture de brise-lames métallique présentant une légère courbure et une ouverture centrale intégrale. Cette conception particulière permet de réaliser la fonction « anti-ballotement » du brise-lames, tout en facilitant le nettoyage intégral de l'intérieur de la citerne, en plaçant judicieusement les dispositifs de lavage au centre des trous d'homme.

Toutefois, cette architecture pose beaucoup de difficultés lorsqu'il s'agit de l'intégrer dans les citernes. En effet, du fait de cette ouverture centrale intégrale, on se retrouve avec des problèmes de tenue mécanique, notamment pour résister aux différentes pressions hydrostatiques du liquide stocké lors des différentes accélérations.

Pour cela, le document EP2058245 proposer d'augmenter la rigidité des brise-lames monolithiques à ouverture centrale intégrale en ménageant un renfort structurel au niveau des extrémités (bord latéral) du brise-lames. Ce renfort structurel présente de plus un profil particulier permettant d'éviter des « zones d'ombres » au lavage.

Toutefois, la solution proposée dans le document EP2058245 permet de répondre aux besoins spécifiques des citernes métalliques mais implique d'une part des tubes impliquant d'une part une complexité industrielle et d'autre part un risque important d'avoir des produits s'insérant dans le tube en cas de tube non étanche et donc un lavage impossible.

De manière générale, dans le domaine des citernes, l'intégration des brise-lames à l'intérieur de la cuve est réalisée par soudure. En outre, lors d'un freinage important, notamment dans le cas où le liquide a une densité volumique de masse importante, le liquide exerce des efforts sur le brise-lames dont le renfort subit des contraintes mécaniques très élevées à ces extrémités soudées à la cuve de la citerne. Il y a donc un risque de descellement ou de microfissures entre la soudure et le brise-lames ou la soudure et la cuve et donc de rendre poreux voir non étanche le tube du brise-lames.

Il est en outre connu des brise-lames comprenant à leur extrémité libre des pieds s'étendant contre la paroi interne de la cuve pour augmenter la résistance aux efforts. Cependant de tels pieds ne sont pas réalisable facilement à l'extrémité d'un tube ou sont très coûteux du fait de la nécessité de réaliser une soudure du pied sur le tube ou un pli compliqué au niveau du tube. En outre, dans le cas de la soudure, il y a toujours un risque que le tube se fissure en amont de la soudure. En plus de tel pied peuvent se toucher et empêcher le passage du liquide ou peuvent être suffisamment proche pour empêcher les secours de trainer entre deux brise-lames une personne par exemple évanouie ou blessée dans la cuve.

En outre, l'intégration d'un brise-lames à ouverture centrale intégrale comme décrit dans le document EP2058245, qui permettrait de faciliter le lavage des citernes occasionne des problématiques de rigidité de la structure globale de la citerne, ce type de brise-lames affaiblissant grandement la rigidité de la citerne du fait que le brise-lames n'est pas un cylindre.

Il est connu aussi des brise-lames comprenant un pli de rigidification à la place du tube de rigidification permettant de réaliser plus simplement la soudure avec un pied. Cependant un tel pli peut se déformer en cas de freinage important et peuvent faire obstruction (zone d'ombre) entre une partie du brise-lames ou de la cuve et une boule de nettoyage insérée dans cuve augmentant le nombre d'ouvertures de lavage.

Une solution peut donc d'augmenter le nombre d'ouverture pour l'insertion de boule de lavage et d'augmenter l'épaisseur du brise-lames.

Le document EP 3 505 395 A1 montre un brise-lames d'une citerne pour le transport de produits liquides ou pulvérulents selon le préambule de la première revendication.

### RESUME DE L'INVENTION

Dans ce contexte, l'invention vise à proposer un brise-lames et une citerne comprenant le brise-lames permettant de supporter les contraintes mécaniques, d'être lavable facilement tout en étant simple et moins couteux et ainsi résoudre les problèmes mentionnés précédemment.

Le brise-lames selon l'invention permet d'intégrer facilement des brise-lames ayant une bonne rigidité dans la cuve de la citerne, et ainsi réduire les coûts de fabrication tout en améliorant la résistance globale de la cuve, le lavage des zones du brise-lames, ainsi que la tenue mécanique des brise-lames une fois intégrés dans la structure globale de la citerne.

A cette fin, l'invention concerne un brise-lames d'une citerne pour le transport de produits liquides ou pulvérulents, comprenant :
- un plat de répartition pour être fixé à une cuve de la citerne,
- une paroi brise-lames comprenant :
   - une portion principale comprenant une face concave et une face convexe et un bord périphérique fixé sensiblement perpendiculairement au plat de répartition,
   - un premier pli, la portion principale étant délimitée par le bord périphérique et le premier pli, le premier pli comprenant une face concave s'étendant de la face convexe de la portion principale et à l'opposé une face convexe s'étendant de la face concave de la portion principale,
   - une première portion de rigidification s'étendant du premier pli, le premier pli étant formé entre la portion principale et la première portion de rigidification,
   - un deuxième pli comprenant une face concave du côté de la face concave de la portion principale et une face convexe du côté de la face convexe de la portion principale,
   - une deuxième portion de rigidification s'étendant du deuxième pli, le deuxième pli étant formé entre la première portion de rigidification et la deuxième portion de rigidification, la deuxième portion de rigidification comprenant un bord d'extrémité libre du brise-lames,
- deux pieds de rigidification comprenant chacun:
   - un bord périphérique de fixation fixé au plat de répartition,
   - un bord de raccord fixé à la paroi brise-lames,
   - un bord libre entre le bord périphérique de fixation et le bord de raccord,
   - au moins une portion d'allongement située entre le bord périphérique de fixation et le bord libre, la portion d'allongement étant inclinée par rapport à la deuxième portion de rigidification.

Grâce à la forme du brise-lames selon l'invention, les brises lames de la citerne résiste mieux aux contraintes par rapport aux brise-lames des citernes de l'état de la technique de même capacité et iso épaisseur de brise-lames, tout en intégrant une ouverture centrale pour faciliter notamment le nettoyage de la citerne et le secours d'une personne.

Ainsi on améliore la tenue mécanique et la résistance aux efforts ou/et on peut diminuer l'épaisseur du brise-lames tout en ayant une tenue mécanique et une résistance aux efforts identiques et tout en ayant une ouverture centrale pour faciliter notamment le nettoyage de la citerne et le secours d'une personne.

En outre le fait d'avoir deux portions de rigidification permet d'améliorer la résistance aux contraintes mécaniques que ce soit lorsqu'un liquide en mouvement exerce une force sur le côté du brise-lames comprenant la face concave de la portion principale ou l'autre côté du brise-lames comprenant la face convexe de la portion principale.

Par portion on entend une partie de la paroi qui s'étend dans une même direction linéaire ou courbe. Deux portions voisines correspond donc à un changement de direction entre les deux portions. Par exemple, sur une même face la première portion peut être concave et la deuxième portion peut être convexe ou/et s'étendre à partir d'un pli convexe sur cette même face.

Par face concave ou convexe, on entend une face totale de la portion d'un même côté.

Outre les caractéristiques qui viennent d'être évoquées dans le paragraphe précédent, le brise-lames selon un aspect de l'invention peut présenter une ou plusieurs caractéristiques complémentaires parmi les modes de réalisation décrit ci-dessous, considérées individuellement ou selon toutes les combinaisons techniquement possibles.

Le brise-lames a une forme de demi-cylindre et la portion principale représente au moins soixante-dix pourcents de la surface du brise-lames.

Selon un mode de réalisation, la portion d'allongement de chaque pied est inclinée de 90° plus ou moins 15° par rapport à la deuxième portion de rigidification. Cela permet d'avoir un pied de fixation ayant peu de contrainte sans diminuer la surface de passage entre deux brises lames dans un même plan perpendiculaire à l'axe de la cuve.

Selon un exemple la largeur de la deuxième portion de rigidification entre le deuxième pli et le bord libre est inférieure, par exemple au moins deux fois moins, à la largeur de la première portion de rigidification. Cela permet de rigidifier la première paroi sans diminuer la surface de passage entre deux brises lames dans un même plan perpendiculaire à l'axe de la cuve.

Selon un mode de réalisation, la deuxième portion de rigidification comprend une largeur entre le deuxième pli et le bord d'extrémité libre, par exemple au moins deux à sept fois moins, à la largeur de la portion de d'allongement. Cela permet de rigidifier la première paroi sans diminuer la surface de passage entre deux brises lames dans un même plan perpendiculaire à l'axe de la cuve.

Selon un mode de réalisation, la tangente de la première portion de rigidification au niveau du deuxième pli forme avec une tangente au niveau de l'extrémité du premier pli de la portion principale, un angle compris entre 85 et 120°, et de manière optimale sensiblement à 100°. Plus l'angle est proche de 90° plus la première portion de rigidification permet de diminuer la déformation de la portion principale, en outre avec un angle au premier pli de 100°, le lavage par une station de lavage avec des boules de lavage est optimisé et est efficace.

Selon un mode de réalisation, la tangente de la première portion de rigidification au niveau du deuxième pli et la deuxième portion de rigidification forme un angle compris entre 80 et 100°, et de manière optimale sensiblement à 90° dans le deuxième pli par rapport à un plan vertical passant par les extrémités de la première portion de rigidification et un plan vertical passant par les extrémités de la deuxième portion de rigidification. Plus l'angle est proche de 90° plus la première portion de rigidification permet de diminuer la déformation de la portion principale.

Selon un mode de réalisation, la première portion de rigidification est courbe. Selon un exemple, la première portion de rigidification comprend une première pliure interne entre le premier pli et le deuxième pli séparant la première portion de rigidification en une première partie de rigidification et une deuxième partie de rigidification. Dans ce mode de réalisation combiné à un ou les deux modes de réalisation précédent la tangente de la première portion de rigidification au niveau du deuxième pli est la deuxième partie de rigidification. Selon un autre exemple, la première portion de rigidification est courbe en comprenant un rayon.

Selon un exemple de ce mode de réalisation, la première portion de rigidification est courbe de manière à avoir une face concave s'étendant du premier pli du côté de la face convexe de la paroi principale au deuxième pli et de haut en bas.

Selon un autre mode de réalisation variante du mode de réalisation précédent, la première portion de rigidification est plane.

Selon un mode de réalisation, la deuxième portion de rigidification est courbe. Par exemple, la deuxième portion de rigidification comprend un premier pli interne entre le premier pli et le deuxième pli séparant la première portion de rigidification en deux parties de rigidification.

Selon un autre mode de réalisation variante du mode de réalisation précédent, la deuxième portion de rigidification est plane.

Dans le cas d'une première ou/et d'une deuxième portion de rigidification courbe, pour mesurer l'angle, on prend le plan passant entre une extrémité de la paroi courbe et l'extrémité opposée de la paroi courbe. Par exemple, dans le cas d'une première portion de rigidification courbe et que la deuxième portion de rigidification est plane formant entre eux dans le deuxième pli un angle compris entre 85° et 120° et de manière optimal à 90° plus ou moins 15°, l'angle est mesuré entre un plan passant dans le premier pli et le deuxième pli et un plan s'étendant dans la deuxième portion de rigidification plane.

Selon un mode de réalisation, le bord de raccord est fixé à la portion principale de la paroi brise-lames.

Selon un mode de réalisation, le bord de raccord est fixé à la première portion de rigidification de la paroi brise-lames.

Selon un mode de réalisation, le bord de raccord est fixé à la deuxième portion de rigidification de la paroi brise-lames.

Selon un mode de réalisation, chaque pied de raccordement a une épaisseur supérieure à la paroi brise-lames. Par exemple, le pied a une épaisseur deux fois supérieur à celle du brise-lames, par exemple 6mm pour le pied et 3mm pour le brise-lames. Cela permet d'avoir une meilleure résistance à la déformation et donc une meilleure tenue au niveau des pieds de raccordement sans augmenter de manière importante le poids du brise-lames et donc de la citerne.

Selon un mode de réalisation, les deux pieds de raccordement sont identiques. Cela permet d'améliorer la productivité et de diminuer le coût.

Selon un mode de réalisation, chaque pied de raccordement comprend une portion d'extension s'étendant du bord de raccord au bord périphérique de fixation en longeant la forme de la paroi du brise-lames. Selon un exemple, la portion d'extension du pied de raccordement comprend un premier et un deuxième pli formant le prolongement du premier et du deuxième pli.

Selon un exemple de ce mode de réalisation, le pied de raccordement comprend un congé formé dans la partie du bord libre de la portion d'extension. Le congé permet d'améliorer la rigidité de la première et deuxième portion de rigidification.

Selon un mode de réalisation, le pied de raccordement comprend une portion de support située entre le bord libre et une partie du bord de support fixée à la deuxième portion de rigidification.

Les différents modes de réalisation énoncés peuvent être combiné entre eux sauf deux variantes entre elles.

Un autre aspect de l'invention concerne une citerne pour le transport de produits liquides comprenant une cuve comprenant un compartiment de stockage et au moins une première paire de brise-lames comprenant deux brise-lames selon l'invention pouvant comprendre une ou des caractéristiques des modes de réalisation décrit précédemment, dans lequel le plat de répartition de chaque brise-lames est fixé à une surface interne de la cuve et en ce que les deux brise-lames de chaque paire brise-lames sont orientés dans un même plan perpendiculaire à l'axe de la citerne et en ayant les portions d'extension des pieds de raccordement de chaque brise-lames d'une paire brise-lames inclinées l'une par rapport à l'autre en formant un angle supérieur à 85° et inférieur à 120°, en particulier 100°. Cela permet d'optimiser le lavage par des boules de lavage. En effet en dessous de 85° le lavage par une station de lavage par boule de lavage n'est pas efficace, et au-dessus de 120° soit l'extrémité de la portion de fixation du pied se rapproche trop proche du fond de la cuve et donc de l'extrémité de la portion de fixation de l'autre pied soit le pied est trop court et donc diffuse sur une moins grande surface les contraintes mécaniques.

Avantageusement, une paire de brise-lames intégrée dans une cuve de la citerne selon l'invention présente deux brise-lames distinctes, indépendantes, espacées l'une de l'autre formant une ouverture centrale intégrale et positionnées dans un même plan transverse à l'axe de la citerne plus ou moins cinq degrés.

Selon un mode de réalisation la cuve comprend une première, une deuxième, une troisième et une quatrième ouvertures de lavage alignées axialement suivant un ordre de l'avant de la cuve à l'arrière de la cuve et en ce que la citerne comprend une première, une deuxième, une troisième et une quatrième paire de brise-lames alignées axialement suivant un ordre de l'avant de la cuve à l'arrière de la cuve, et en ce que :
la première paire brise-lames est située axialement entre la première ouverture et la deuxième ouverture et comprend la face concave de chaque brise-lames en regard de l'avant,
la deuxième paire brise-lames est située axialement au niveau de la deuxième ouverture et comprend la face concave de chaque brise-lames en regard de l'avant,
la troisième paire brise-lames est située axialement au niveau de la troisième ouverture et comprend la face concave de chaque brise-lames en regard de l'arrière,
la quatrième paire brise-lames est située axialement entre la troisième et la quatrième ouverture et comprend la face concave de chaque brise-lames en regard de l'arrière.

Selon un mode de réalisation, la première et dernière paire brise-lames sont situées chacune respectivement au moins deux fois, en particulier quatre fois, plus près axialement de la première et dernière ouverture que de la deuxième et troisième ouverture.

Selon un mode de réalisation, la deuxième et troisième paire brise-lames sont situées chacune respectivement tel que le premier pli est situé axialement au niveau du centre de la deuxième et troisième ouverture.

Selon un mode de réalisation la citerne comprend une ouverture de lavage par paire de brise-lames et en ce que chaque paire de brise-lames est agencée dans la citerne par rapport aux ouvertures de lavage, telle que deux boules de lavage introduite dans la cuve par le biais de deux ouvertures de lavage voisine, permettent de laver une section de la citerne comprenant au moins toute la surface d'un côté d'une paire de brise-lames et une surface interne de la cuve et en en ce que la surface interne de la cuve et les deux côtés de chaque paire de brise-lames peuvent être lavés complétement en incorporant une boule de lavage par ouverture.

Selon un mode de réalisation, la citerne comprend une ouverture de lavage par paire de brise-lames et en ce que chaque paire de brise-lames est agencée dans la citerne par rapport aux ouvertures de lavage telle que la surface interne de la cuve et les surfaces des brise-lames sont entièrement accessibles à partir d'au moins une projection d'un axe vertical d'une des ouvertures.

Selon un mode de réalisation, une ouverture de lavage est plus grande permettant le passage d'un humain dans la cuve, en particulier la première ouverture.

Avantageusement, ladite citerne est un véhicule citerne, une caisse mobile citerne, un conteneur citerne ou encore un wagon citerne.

L'invention sera mieux comprise à la lumière de la description qui suit.

L'invention et ses différentes applications seront mieux comprises à la lecture de la description qui suit et à l'examen des figures qui l'accompagnent.

### BREVE DESCRIPTION DES FIGURES

D'autres caractéristiques et avantages de l'invention ressortiront à la lecture de la description qui suit, en référence aux figures annexées :
- la figure 1 représente une vue tridimensionnelle d'un côté d'un exemple de brise-lames selon l'invention;
- les figures 2A et 2B représente une même vue en coupe selon un plan horizontal du brise-lames de la figure 1.
- la figure 2C représente schématiquement une partie du brise-lames selon une section ayant la même vue en coupe que celle de la figure 2A.
- La figure 3 représente une portion d'une cuve de la citerne et le brise-lames représenté à la figure 1, intégré dans la cuve de la citerne ;
- la figure 4 représente une paire de brise-lames selon un exemple de l'invention selon une vue tridimensionnelle ;
- la figure 5 représente schématiquement une citerne comprenant une cuve et plusieurs paires de brise-lames telles que celle représentée à la figure 4 selon une vue tridimensionnelle ;
- la figure 6 schématiquement une citerne représentée à la figure 5 selon une vue de dessus ;
- la figure 7 représente des zones de lavage de la citerne selon une vue tridimensionnelle d'un côté selon une coupe d'un plan A-A de la figure 5 ;
- la figure 8 représente des zones de lavage de la citerne selon une autre vue tridimensionnelle d'un côté selon une coupe d'un plan A-A de la figure 5 ;

### DESCRIPTION DETAILLEE

Les figures sont présentées à titre indicatif et nullement limitatif de l'invention.

Sauf précision contraire, un même élément apparaissant sur des figures différentes présente une référence unique.

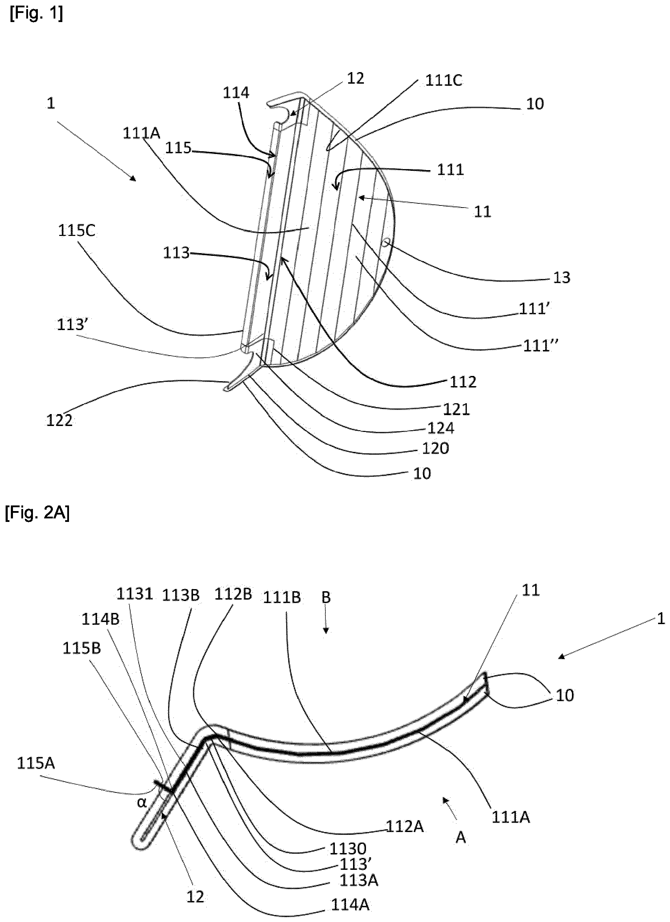

[Fig. 1] représente une vue tridimensionnelle d'un côté d'un exemple de brise-lames selon l'invention d'un exemple de brise-lames selon l'invention;
[Fig. 2A] représente une vue en coupe selon un plan horizontal du brise-lames représenté à la figure 1, intégré dans la cuve de la citerne.

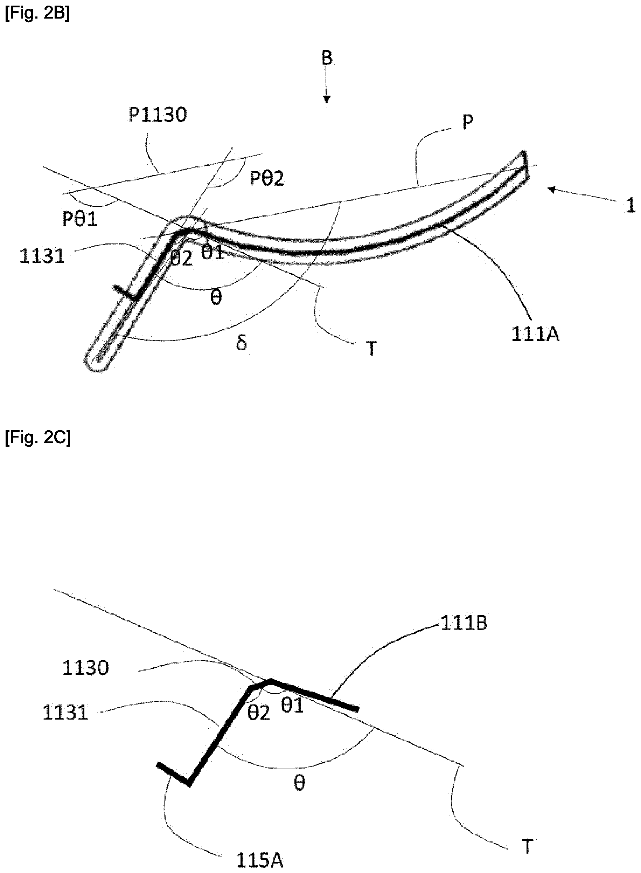

[Fig. 2B] représente la même vue en coupe que celle de la figure 2A comprenant en outre des angles projetés.
[Fig. 2C] représente schématiquement une partie du brise-lames selon une section ayant la même vue en coupe que celle de la figure 2A.

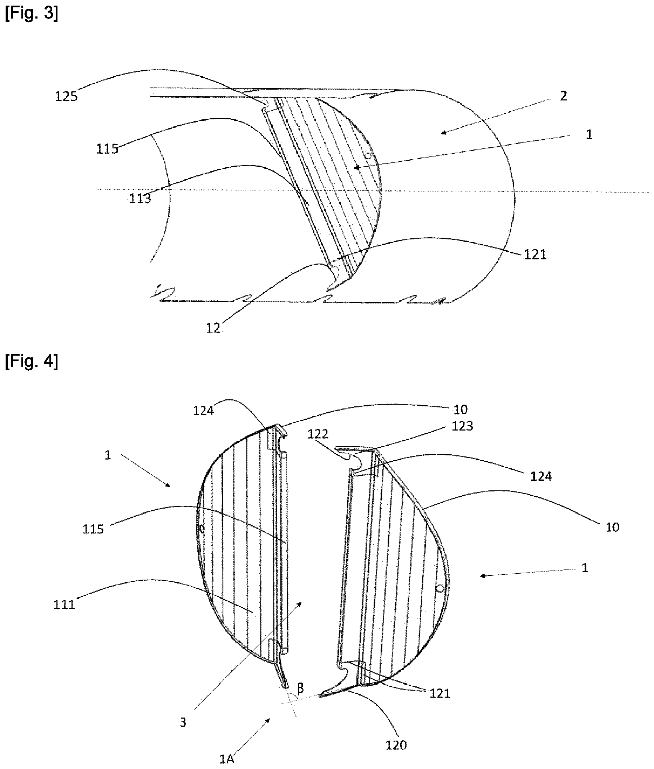

[Fig. 3] représente une portion d'une cuve de la citerne et le brise-lames représenté à la figure 1, intégré dans la cuve de la citerne
[Fig. 4] représente une paire de brise-lames selon un exemple de l'invention selon une vue tridimensionnelle.

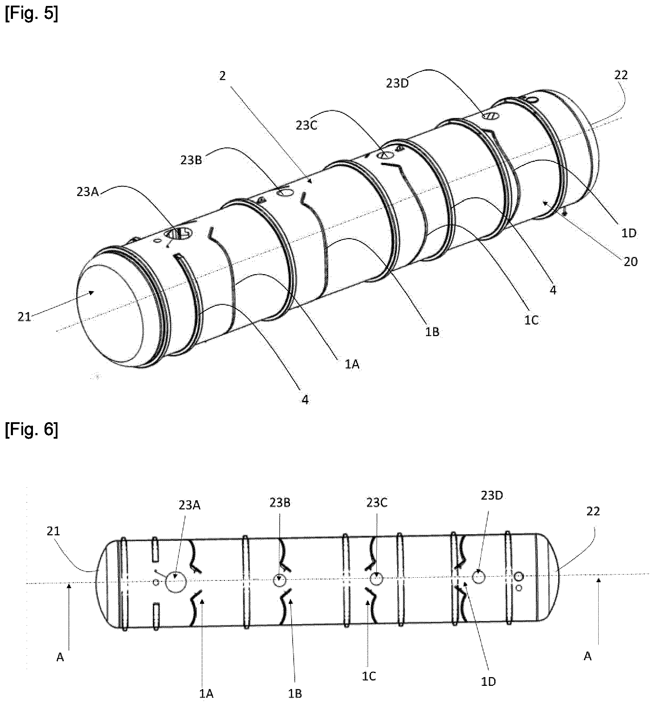

[Fig. 5] représente schématiquement une citerne selon un exemple de l'invention comprenant une cuve et une pluralité de paires de brise-lames représentés selon l'exemple de la figure 3 selon une vue tridimensionnelle.
[Fig. 6] représente une citerne représentée à la figure 4 selon une vue de dessus.

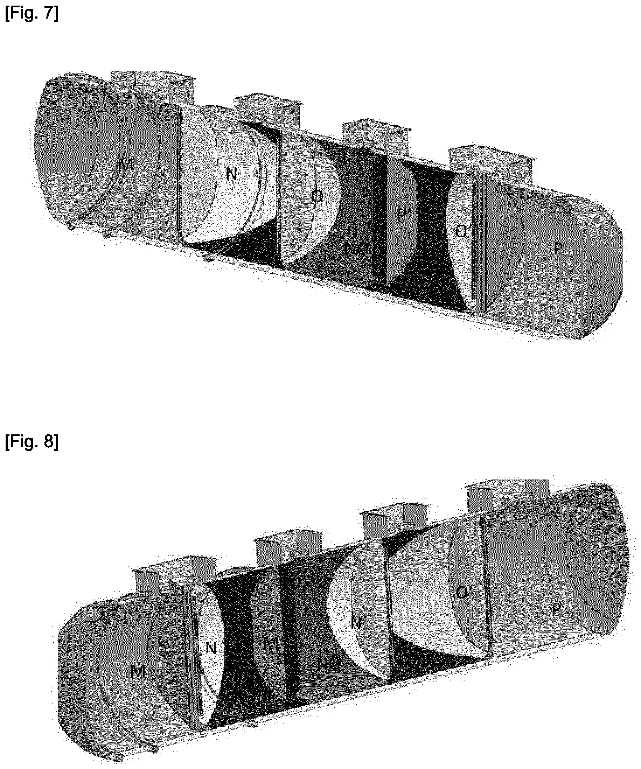

[Fig. 7] représente schématiquement des zones de lavage par boule de lavage selon une vue tridimensionnelle d'une citerne en coupe selon le plan A-A.
[Fig. 8] représente schématiquement des zones de lavage par boule de lavage selon une autre vue tridimensionnelle de la citerne en coupe selon le plan A-A.

Sauf précision contraire, les adjectifs « intérieur », « interne », « extérieur », « externe » sont utilisés dans la présente demande en référence à une direction radiale de la citerne de sorte que la partie intérieure, interne d'un élément est, suivant une direction radiale, plus proche de l'axe longitudinal de la citerne que la partie extérieure, externe du même élément.

Sauf précision contraire, les adjectifs « vertical », «horizontal» sont utilisés dans la présente demande en référence à une destination du produit dans une cuve d'une citerne pour son utilisation. La direction horizontale est parallèle à l'axe de la citerne de sorte qu'elle peut couper les paires de brise-lames tandis que la direction verticale perpendiculaire à la direction horizontale est perpendiculaire à l'axe de sorte qu'elle ne peut couper qu'une seule paire de brise-lames.

En référence à la figure 1, un brise-lames 1 selon un exemple de l'invention est représenté. Le brise-lames 1 présente une forme sensiblement semi-circulaire et est destiné à être positionné dans un même plan transversal par rapport à un axe de la citerne.

Le brise-lames comporte un plat de répartition 10 pour être fixé à une cuve 2 de la citerne. Le plat de répartition 10 permet de souder facilement le brise-lames dans une surface interne de la cuve 2 ou de raccorder deux viroles formant la cuve 2 par le biais du plat de répartition 10.

Le brise-lames 1 comporte une paroi brise-lames 11 configurée pour bloquer les mouvements du liquide stocké.

La paroi brise-lames 11 comporte une portion principale 111 comprenant une face concave 111A d'un côté A visible sur la figure 1 et une face convexe 111B d'un autre côté B visible sur la figure 2A. La portion principale 111 comporte en outre un bord périphérique 111C fixé sensiblement perpendiculairement au plat de répartition 10. Par sensiblement on entend plus ou moins 2°.

La portion principale 111 a donc une forme en courbure pour résister à la déformation lors de contrainte élevée. La forme courbe est suivant un axe vertical du côté B.

La paroi brise-lames 11 comporte en outre un premier pli 112 s'étendant verticalement dans la paroi brise-lames 11. Le premier pli 112 comprend une face convexe 112A du premier côté A et une face concave 112B du côté B. Autrement dit la face concave 112B s'étend de la face convexe 111B de la portion principale 111 et à l'opposé, la face convexe 112A s'étend de la face concave 111A de la portion principale 111.

La portion principale 111 est donc délimitée par son bord périphérique 111C et le premier pli 112.

Dans cet exemple, la courbure de la portion principale 111 est formée par une multitude de déformation formant des pliures 111' s'étendant verticalement et des surfaces 111" en l'occurrence planes formant d'un côté A la face concave 111A et de l'autre côté B la face convexe 111B. La portion principale 111 peut aussi selon un autre exemple être courbe. L'avantage de la portion principale 111 formée par une multitude de pliures 111' et de surfaces planes 111" est de simplifier le procédé de fabrication et donc diminuer le coût.

La paroi brise-lames 11 comporte en outre une première portion de rigidification 113 s'étendant du premier pli 112. Le premier pli 112 est donc formé entre la portion principale 111 et la première portion de rigidification 113.

La paroi brise-lames 11 comporte en outre un deuxième pli 114 s'étendant verticalement et une deuxième portion de rigidification 115 s'étendant du deuxième pli 114 formé entre la première portion de rigidification 113 et la deuxième portion de rigidification 115.

Le deuxième pli 114 comprend une face concave 114A du côté A et une face convexe 114B du côté B.

La deuxième portion de rigidification 115 comprend un bord d'extrémité libre 115C du brise-lames, et est donc délimitée entre son bord d'extrémité libre 115C et le deuxième pli 114.

Dans cet exemple, la première portion de rigidification 113 comprend une première pliure interne 113' entre le premier pli 112 et le deuxième pli 114 séparant la première portion de rigidification 113 en une première partie de rigidification 1130 et une deuxième partie de rigidification 1131. La première partie de rigidification 1130 est située entre le premier pli 112 et la pliure interne 113' et la deuxième partie de rigidification 1131 est située entre la pliure interne 113' et le deuxième pli 114. Bien entendu, dans cet exemple de ce mode de réalisation, la première portion de rigidification 113 peut comprendre plusieurs pliures. Dans ce mode de réalisation la première portion de rigidification 113 a donc la forme d'une courbure. La pliure interne 113' est, dans ce mode de réalisation orientée, telle que la première portion de rigidification 113 a une face concave du côté A et une face convexe du côté B comme le premier pli 112.

Dans cet exemple un angle θ est représentée sur les figures 2B et 2C entre la deuxième portion de rigidification 113 et une tangente T au niveau de l'extrémité du premier pli 112 de la portion principale 111 est compris entre 85° et 120° et est en l'occurrence sensiblement égale à 100°.

En l'occurrence un angle θ1 au niveau du premier pli 112 du côté A entre la première partie 1130 de la première portion principale 113 et la portion principale 111 est égale sensiblement à 140° et un angle θ2 vue du côté A dans la pliure interne 113' entre la première partie de rigidification 1130 et la deuxième partie de rigidification 1131 de la première portion principale est égal sensiblement à 140°.

Par angle égal sensiblement, on entend plus ou moins 1°.

Ainsi l'angle θ entre la première portion 113 et la tangente T au niveau de l'extrémité du premier pli 112 de la portion principale est de 100° vue de la face convexe 111A de la portion principale 111. Les angles sont mesurés dans un plan horizontal comprenant l'axe X. Sur la figure 2B, des projections de ces angles θ1 et θ2 sont représentés avec une projection P1130 de la première partie de rigidification 1130 de la portion de rigidification 113. La projection de l'angle θ1 est référencé Pθ1 et la projection de l'angle θ2 est référencé Pθ2.

La première partie de rigidification 1130 de la première portion de rigidification 113 est dans cet exemple dans le prolongement d'un plan vertical P passant par les extrémités de la portion principale 111. Autrement dit l'angle entre ce plan et la première partie de rigidification 1130 est d'environ 180° permettant ainsi d'avoir un premier pli 112 assez ouvert pour faciliter le lavage.

La première partie de rigidification 1130 a une largeur mesurée horizontalement plus petite que la largeur de la deuxième partie de rigidification 1131, par exemple 5 fois plus petite. Ainsi un angle δ représenté sur la figure 2B entre le plan P et la deuxième partie de rigidification 1131 est proche de l'angle θ2, soit sensiblement 132.65°.

En effet, on s'est rendu compte qu'avec un angle θ à 100°, le lavage du brise-lames par des boules de lavage est optimisé et qu'au-delà de la plage 85° et 120° soit le lavage du brise-lames par des boules de lavage est moins efficace et peut laisser des zones d'ombres soit la rigidification n'est pas suffisante. Avec un angle de 90° la rigidification est optimale, mais le meilleur compromis lavage/rigidification est avec un angle de 100°. En outre, du fait de la courbure de la portion principale, la première pliure interne 113' permet à ce que le premier pli 112 comprend un angle θ1 supérieure à 120° pour améliorer le lavage dans l'angle tout en diminuant les contraintes mécaniques sur ce premier pli 112.

. En effet plus cet angle est ouvert plus les boules de lavage sont efficaces.

Cet angle θ de 100° permet à la première portion de rigidification 113 d'optimiser la rigidification de la portion principale 111.

Dans ce mode de réalisation, la deuxième portion de rigidification 115 est plane et est inclinée par rapport à l'extrémité de la première portion de rigidification 113 par le biais du deuxième pli 114 selon un angle compris entre 85 et 95°, en l'occurrence sensiblement 90°. Cet angle de 90° permet à la deuxième portion de rigidification 115 d'optimiser la rigidification de la première portion de rigidification 113.

Le brise-lames 1 comporte en outre deux pieds de rigidification 12 fixés à la paroi brise-lames 11 au plat de répartition 10. Les deux pieds de rigidification 12 sont situés de manière opposée l'un à l'autre verticalement.

Dans ce mode de réalisation, les deux pieds de rigidification 12 sont identiques et sont fixés à la paroi brise-lames symétriquement par rapport à un plan horizontale passant par le milieu de la paroi brise-lames 11. Un seul pied de rigidification 12 est décrit dans la suite.

Le pied a une épaisseur supérieure à la paroi brise-lames, en l'occurrence 6mm et la paroi brise-lames a une épaisseur de 3mm. La paroi brise-lames et le pied de rigidification sont dans la même matière, dans un acier de type acier inoxydable et le plat de répartition est en acier inoxydable est a une épaisseur de 4mm.

Le pied de rigidification 12 comprend un bord périphérique de fixation 120 fixé au plat de répartition 10. Ce bord périphérique de fixation 120 s'étend de manière courbe presque horizontalement sur l'extrémité du plat de répartition 12 correspondant.

Le pied de rigidification 12 comprend en outre un bord de raccord 121 fixé à la paroi brise-lames 11 et un bord libre 122 entre le bord périphérique de fixation 120 et le bord de raccord 121.

Dans ce mode de réalisation, le bord de raccord 121 est fixé à la portion principale 111 de la paroi brise-lames 11 et à la première portion de rigidification 113.

En outre dans cet exemple de ce mode de réalisation, le bord de raccord 121 est fixé à la deuxième portion de rigidification 115 de la paroi brise-lames 1.

Le pied de rigidification 12 comporte au moins une portion d'allongement 123 située entre le bord périphérique de fixation 120 et le bord libre 122.

La portion d'allongement 123 est inclinée par rapport à la deuxième portion de rigidification selon un angle α mesuré dans un plan horizontal compris entre 75° et 105°. En l'occurrence l'angle α est sensiblement de 90° et est visible sur la figure 2A.

Dans ce mode de réalisation, le pied de raccordement 12 comprend une portion d'extension 124 s'étendant du bord de raccord 121 au bord périphérique de fixation 120 et longe la forme de la paroi du brise-lames 11.

Dans cet exemple la portion d'extension 124 du pied de raccordement 12 comprend un premier pli et un deuxième pli formant le prolongement vertical du premier pli 112 et du deuxième pli 113.

La portion d'extension 124 comprend une partie formant le prolongement vertical de la première portion de rigidification 113, et donc comprend une pliure formant le prolongement de la pliure 113'.

Dans cet exemple la portion d'extension 124 comprend une partie formant le prolongement vertical de la deuxième portion de rigidification 115. Cela permet d'améliorer la rigidité de la deuxième portion de rigidification 115.

Dans cet exemple de ce mode de réalisation, le pied de raccordement 12 comprend un congé 125 formé dans la partie du bord libre 122 de la portion d'extension 124. Le congé 125 du pied permet d'améliorer la rigidité de la première 113 et deuxième portion de rigidification 115.

La paroi brise-lames 11 comporte dans cet exemple une ouverture 13 de passage de fluide au milieu vertical de la portion principale située proche de l'extrémité externe du brise-lames. Cela permet qu'en cas de renversement de la citerne, par exemple un camion comprenant la citerne renversée, au liquide contenu dans la citerne de passer d'un compartiment à un autre compartiment.

Le brise-lames est agencé pour être monté par paire dans une cuve 2. La paire de brise-lames présente donc une forme sensiblement circulaire, constituée des deux brise-lames semi-circulaires positionnées dans un même plan transversal.

La figure 4 montre une première paire brise-lames 1A dont les brise-lames sont positionnés ensemble pour être montés dans une cuve et la figure 5 représente une citerne comprenant une cuve 2 dans laquelle plusieurs paires de brise-lames 1A, 1B, 1C, 1D sont fixées dans la cuve. On peut voir sur cette figure 5, les traces de fixation des plats de répartitions 10 de chaque brise-lames 1.

Une ouverture centrale intégrale 3 est ménagée dans une région centrale de la cuve 2 entre deux brise-lames 1 d'une paire de brise-lames. Cette ouverture centrale intégrale 3 montrée en figure 4, permet le passage du liquide stocké dans la cuve de part et d'autre de la paire de brise-lames, tout en réduisant les oscillations, ou les effets de ballotement du liquide stocké.

On entend par ouverture centrale intégrale, une ouverture ménagée dans une position sensiblement centrale du brise-lames qui s'étend diamétralement de part et d'autre des bords d'extrémités libres des deuxièmes parois de rigidification des brise-lames, de sorte qu'un brise-lames est positionné idéalement dans un même plan transversal, et indépendantes de l'autre brise-lames 1 de la paire de brise-lames. Les deux brise-lames peuvent aussi être inclinés l'un par rapport à l'autre par exemple de 5° ou de 2°.

La citerne selon l'invention comporte une cuve 2 définissant au moins un compartiment de stockage dans lequel au moins une paire de brise-lames 1 est ménagée. En l'occurrence quatre paires de brise-lames 1A, 1B, 1C, 1D sont représentées à l'intérieur de la cuve 2 sur la figure 5 dont seul un brise-lames par paire de brise-lames est représenté. La cuve 2 de la citerne est composée classiquement d'une virole cylindrique 20, un fond de cuve avant 21 et un fond de cuve arrière 22 fermant les extrémités de la virole 210. La cuve 2 comporte également au moins une ouverture de lavage 23A ménagée en partie supérieure de la virole 20 utilisée pour le remplissage, l'inspection, le lavage ou la maintenance de la citerne, comme par exemple un trou d'homme.

En l'occurrence, dans ce mode de réalisation la cuve comporte un seul compartiment et autant d'ouvertures de lavage 23A, 23B, 23C, 23D que de paires brise-lames. Les ouvertures de lavage sont alignées axialement en partie supérieure de la cuve 2 dont la première ouverture 23A est un trou d'homme et comporte un diamètre supérieur aux diamètres des trois autres ouvertures de lavage 23B, 23C, 23D. La cuve pourrait comporter deux ou plus de compartiment de stockage en intégrant une paroi pleine fixée de manière étanche divisant la cuve en plusieurs compartiments séparés.

Comme indiqué précédemment, la paire de brise-lames 1A présente donc une forme sensiblement circulaire, constituée des deux brise-lames 1 semi-circulaires positionnées dans un même plan transversal, l'espace séparent les deux brise-lames correspondant aux dimensions de l'ouverture centrale 3.

Les deux brises lames 1 sont orientés de telle façon que les portions d'extension 124 des pieds de raccordement 12 de chaque brise-lames sont inclinées l'une par rapport à l'autre en formant un angle β supérieur à 85° et inférieur à 120°, en l'occurrence sensiblement 100°.

La citerne comprend en outre des renforts 4 pour maintenir et supporter la cuve. En l'occurrence, la citerne comprend six renforts 4 dont quatre sur la partie arrière de la citerne et deux sur la partie avant de la citerne. Le fait qu'il y a plus de renfort 4 à l'arrière permet à un camion de porter plus de poids de la citerne sur la partie arrière de la remorque du camion et ainsi de porter avec les essieux à l'arrière de la remorque plus de poids de la citerne.

La figure 6 représente schématiquement la citerne vue de dessus comprenant les quatre paires de brise-lames 1A, 1B, 1C, 1D selon un exemple de ce mode de réalisation de l'invention.

La cuve 2 comprend donc une première ouverture de lavage 23A, une deuxième ouverture de lavage 23B, une troisième ouverture de lavage 23C et une quatrième ouverture de lavage 23C alignées axialement suivant un ordre de l'avant de la cuve 2 à l'arrière de la cuve 2. La première, deuxième, troisième et quatrième paires de brise-lames sont aussi alignées axialement suivant un ordre de l'avant de la cuve à l'arrière de la cuve.

La première paire brise-lames 1A est située axialement entre la première ouverture 23A et la deuxième ouverture 23B et comprend la face concave de chaque brise-lames 1 de la paire 1A en regard de l'avant de la citerne. En particulier, dans cet exemple, la première paire brise-lames est située au moins deux fois, en particulier quatre fois, plus près axialement de la première ouverture que de la deuxième ouverture.

La deuxième paire brise-lames 1B est située axialement au niveau de la deuxième ouverture 23B et comprend la face concave de chaque brise-lames 1 de la paire de brise-lames 1B en regard de l'avant. En l'occurrence, dans cet exemple, le premier pli des deux brise-lames 1 de la paire 1B est situé axialement au niveau du centre de la deuxième ouverture 23B.

La troisième paire brise-lames 1C est située axialement au niveau de la troisième ouverture 23C et comprend la face concave de chaque brise-lames 1 de la paire 1C en regard de l'arrière. En l'occurrence, dans cet exemple, le premier pli des deux brise-lames 1 de la paire 1C est situé axialement au niveau du centre de la troisième ouverture 23B.

La quatrième paire brise-lames 1D est située axialement entre la troisième ouverture de lavage 23C et la quatrième ouverture de lavage 23D et comprend la face concave de chaque brise-lames de la paire 1D en regard de l'arrière. En particulier, dans cet exemple, la dernière paire brise-lames 1D est située au moins deux fois, en particulier quatre fois, plus près axialement de la dernière ouverture 23D que de la troisième ouverture de lavage 23C.

Comme on peut le voir sur la figure 6, dans cet exemple, les extrémités des pieds 12 des deux brise-lames de chacune des paires de brise-lames, 1A, 1B, 1C, 1D sont plus éloignées l'une de l'autre que le diamètre des deuxième, troisième et quatrième ouverture de lavage 23B, 23C, 23D. La citerne peut être divisée en section, dont une première section située entre le fond avant 21 et la première paire de brise-lames 1A face avant compris, une deuxième section située entre la première paire de brise-lames 1A face arrière compris et la deuxième paire de brise-lames 1B face avant compris, une troisième section située entre la deuxième paire de brise-lames 1B face arrière compris et la troisième paire de brise-lames 1C face avant compris, une quatrième section située entre la troisième paire de brise-lames 1C face arrière compris et la quatrième paire de brise-lames face avant compris, une cinquième section dite aussi dernière section située entre la quatrième paire de brise-lames 1D face arrière compris et le fond arrière 22.

La citerne est configurée pour pouvoir laver les cinq sections en insérant quatre boules de lavages dans chacune des ouvertures.

La figure 7 montre schématiquement des zones de lavage par boule de lavage selon une vue tridimensionnelle d'une citerne en coupe selon le plan A-A et la figure 8 montre schématiquement les zones de lavage par boule de lavage selon une autre vue tridimensionnelle de la citerne en coupe selon le plan A-A.

La citerne comprend une première zone de lavage M correspondant à la première section soit entre la première paire de brise-lames 1A et le fond de cuve avant 21.

La zone de lavage M comporte donc la surface interne de la cuve de cette première section et la face avant de chaque brise-lames 1 de la première paire 1A comportant la face concave de la portion principale 11 et la face concave du fond de cuve 21. Toutes ces faces, surfaces de la zone de lavage M sont accessibles à partir d'une projection à partir d'un axe vertical de la première ouverture et peuvent donc être lavées par une boule de lavage insérée dans la première ouverture.

La citerne comprend une deuxième zone de lavage M', représentée sur la figure 8. La deuxième zone de lavage comprend une partie de la surface interne de la cuve 2 de la deuxième section et une partie de la surface concave 111B de la face avant de la portion principale 111 des deux brise-lames 1 de la deuxième paire de brise-lames 1B.

Toutes ces surfaces de la deuxième zone de lavage M' sont accessibles à partir d'une projection à partir d'un axe vertical de la première ouverture 23A et donc peuvent être lavées par cette première boule de lavage.

La citerne comprend une troisième zone de lavage MN située dans la deuxième section représentée sur les figures 7 et 8.

La troisième zone de lavage MN comprend une partie de la surface interne de la cuve dans la deuxième section, ainsi qu'une partie externe de la face concave de la portion principale 11 et les surfaces du coté avant du pied, du premier pli 112, de la première portion de rigidification 113, du deuxième pli 114 et de la deuxième portion de rigidification 115 des brise-lames de la deuxième paire 1B. Cette troisième zone de lavage MN est accessible à partir d'une projection à partir à la fois d'un axe vertical de la première ouverture 23A et à la fois d'un axe vertical de la deuxième ouverture 23B. Cette troisième zone de lavage MN peut donc être lavée à la fois par la première boule de lavage et par une deuxième boule de lavage insérée dans la deuxième ouverture 23B.

La première ouverture 23A permet donc à une première boule de lavage de laver toute la première section de la citerne ainsi qu'une partie de la deuxième section.

La citerne comprend une quatrième zone de lavage N située dans la deuxième section représentée sur les figures 7 et 8. La quatrième zone de lavage N comprend une partie de la surface interne de la deuxième section et les surfaces de la face arrière de la première paire de brise-lames 1A comprenant la face convexe 111A de la portion principale 111 de la paroi 11 des deux brise-lames 1 de la première paire 1A.

Cette quatrième zone de lavage N correspond aux surfaces de la deuxième section soustrait de la troisième zone de lavage MN et de la deuxième zone de lavage N'.

Toutes ces faces, surfaces de la zone de lavage N sont accessibles à partir d'une projection à partir d'un axe vertical de la deuxième ouverture 23B et donc peuvent être lavées par la deuxième boule de lavage insérée dans la deuxième ouverture 23B.

La surface totale de la deuxième section peut donc être lavée par la première boule de lavage et la deuxième boule de lavage.

La citerne comprend une cinquième zone de lavage O située dans la troisième section représentée sur la figure 7. La cinquième zone de lavage O comprend les surfaces de la face arrière de la deuxième paire de brise-lames 1B comprenant la face convexe 111A de la portion principale 111 de la paroi 11 des deux brise-lames 1 de la deuxième paire 1B et une partie de la surface interne de la cuve 2 dans la deuxième section.

Toutes ces faces, surfaces de la zone de lavage O sont accessibles à partir d'une projection à partir d'un axe vertical de la troisième ouverture 23C et donc peuvent être lavées par une troisième boule de lavage insérée dans la troisième ouverture 23C.

La citerne comprend une sixième zone de lavage NO située dans la troisième section représentée sur les figures 7 et 8. La sixième zone de lavage NO comprend une partie de la surface interne de la cuve 2 dans la troisième section.

Toute cette surface de la sixième zone de lavage NO est accessible à partir d'une projection à partir à la fois d'un axe vertical de la deuxième ouverture 23B et à la fois d'un axe vertical de la troisième ouverture 23C. Cette sixième zone de lavage NO peut donc être lavée à la fois par la deuxième boule de lavage et par la troisième boule de lavage insérée dans la troisième ouverture 23C.

La citerne comprend une septième zone de lavage N' située dans la troisième section représentée sur la figure 8. La septième zone de lavage N' comprend une partie de la surface interne de la cuve 2 de la troisième section et les surfaces de la face avant de la troisième paire de brise-lames 1C comprenant la face convexe 111Ade la portion principale 111 de la paroi 11 des deux brise-lames 1 de la troisième paire 1C.

Toutes ces surfaces de la septième zone de lavage N' sont accessibles à partir d'une projection à partir d'un axe vertical de la deuxième ouverture 23B et donc peuvent être lavées par cette deuxième boule de lavage insérée dans la deuxième ouverture 23B.

La deuxième ouverture permet donc à une deuxième boule de lavage de laver une partie de la deuxième section de la citerne ainsi qu'une partie de la troisième section.

La surface totale de la troisième section peut donc être lavée par la deuxième boule de lavage et la troisième boule de lavage.

La citerne comprend une huitième zone de lavage O' située dans la quatrième section représentée sur les figures 7 et 8. La huitième zone de lavage O' comprend une partie de la surface interne de la troisième section et les surfaces de la face avant de la quatrième paire de brise-lames 1D comprenant la face convexe 111A de la portion principale 111 de la paroi 11 des deux brise-lames 1 de la quatrième paire 1D.

Toutes ces surfaces de la septième zone de lavage O' sont accessibles à partir d'une projection à partir d'un axe vertical de la troisième ouverture 23C et donc peuvent être lavée par la troisième boule de lavage insérée dans la troisième ouverture 23C.

La citerne comprend une neuvième zone de lavage OP située dans la quatrième section représentée sur les figures 7 et 8.

La neuvième zone de lavage OP comprend une partie de la surface interne de la cuve dans la quatrième section, ainsi qu'une partie externe de la face concave de la portion principale 11 et les surfaces du coté arrière du pied, du premier pli 112, de la première portion de rigidification 113, du deuxième pli 114 et de la deuxième portion de rigidification 115 des brise-lames de la troisième paire 1C. Cette neuvième zone de lavage OP est accessible à partir d'une projection à partir à la fois d'un axe vertical de la troisième ouverture 23C et à la fois d'un axe vertical de la quatrième ouverture 23D. Cette neuvième zone de lavage OP peut donc être lavée à la fois par la troisième boule de lavage et par une quatrième boule de lavage insérée dans la quatrième ouverture 23B.

Toutes ces faces, surfaces de la neuvième zone de lavage OP peuvent donc être lavées par la troisième et quatrième boule de lavage.

La troisième ouverture 23A permet donc à une troisième boule de lavage de laver une partie de la troisième section de la citerne ainsi qu'une partie de la quatrième section.

La citerne comprend une dixième zone de lavage P' située dans la quatrième section représentée sur la figure 7.

La dixième zone de lavage P' comprend une partie de la surface interne de la cuve 2 de la quatrième section et une partie de la surface concave 111B de la face arrière de la portion principale 111 de brise-lames 1 de la troisième paire de brise-lames 1C.

Toutes ces surfaces de la dixième zone de lavage P' sont accessibles à partir d'une projection à partir d'un axe vertical de la quatrième ouverture 23D donc peuvent être lavées par une quatrième boule de lavage insérée dans la quatrième ouverture 23D.

Cette dixième zone de lavage P' correspond aux surfaces de la quatrième section soustrait de la huitième zone de lavage O' et de la neuvième zone de lavage OP.

La surface totale de la quatrième section peut donc être lavée par la troisième boule de lavage et la quatrième boule de lavage.

La citerne comprend une onzième zone de lavage P correspondant à la cinquième et dernière section soit entre la quatrième paire de brise-lames 1D et le fond de cuve arrière 22.

La zone de lavage P comporte donc la surface interne de la cuve dans cette dernière section et la face arrière de chaque brise-lames 1 de la quatrième paire 1D comportant la face concave de la portion principale 11 et la face concave du fond de cuve 21. Toutes ces faces, surfaces de la zone de lavage P peuvent donc être lavées par une boule de lavage insérée dans la dernière ouverture.

La citerne peut être lavée à l'intérieure entièrement en une seule étape en insérant quatre boules de lavage différentes. Une telle citerne a donc l'avantage de comporter cinq sections séparées par quatre paires de brise-lames tout en pouvant être lavée par seulement quatre boules de lavage, tout en ayant une bonne résistance aux contraintes mécaniques liées aux forces exercées par le déplacement d'un liquide notamment en cas de freinage d'urgence et enfin tout en permettant d'avoir une ouverture centrale intégrale 3 entre chaque brise-lames 1 d'une paire pour le passage d'un humain. L'intérêt de pouvoir laver la citerne avec quatre boules de lavage est qu'il existe des stations de lavage ne comportant que quatre boules et donc ne nécessite qu'un seul passage dans la station de lavage.

La première, deuxième, troisième, quatrième boule de lavage peuvent être une même boule de lavage insérée à diffèrent moment dans respectivement la première, deuxième, troisième et quatrième ouverture ou peuvent être deux boules de lavage insérées en deux étapes chacune dans deux différentes ouvertures 23.

## Revendications

1. Brise-lames (1) d'une citerne pour le transport de produits liquides ou pulvérulents, comprenant :
- un plat de répartition (10) pour être fixé à une cuve (2) de la citerne,
- une paroi brise-lames (11) comprenant :
o une portion principale (111) comprenant une face concave (111A) et une face convexe (111B) et un bord périphérique (111C) fixé sensiblement perpendiculairement au plat de répartition (10),
o un premier pli (112), la portion principale (111) étant délimitée par le bord périphérique (111C) et le premier pli (112), le premier pli (112) comprenant une face concave (112A) s'étendant de la face convexe (111B) de la portion principale (111) et à l'opposé une face convexe (112B) s'étendant de la face concave (111A) de la portion principale (111),
o une première portion de rigidification (113) s'étendant du premier pli (112), le premier pli (112) étant formé entre la portion principale (111) et la première portion de rigidification (113), le brise-lames étant **caractérisé en ce que**:
la paroi de brise-lames comprend de plus:
o un deuxième pli (114) comprenant une face concave (114A) du côté (A) de la face concave (111A) de la portion principale (111) et une face convexe (114B) du côté (B) de la face convexe (111B) de la portion principale (111),
o une deuxième portion de rigidification (115) s'étendant du deuxième pli (114), le deuxième pli (114) étant formé entre la première portion de rigidification (113) et la deuxième portion de rigidification (115), la deuxième portion de rigidification (115) comprenant un bord d'extrémité libre (115C) du brise-lames (1), et le brise-lames comprenant deux pieds de rigidification (12) comprenant chacun:
o un bord périphérique de fixation (120) fixé au plat de répartition (10),
o un bord de raccord (121) fixé à la paroi brise-lames (11),
o un bord libre (122) entre le bord périphérique de fixation (120) et le bord de raccord (121),
o au moins une portion d'allongement (123) située entre le bord périphérique de fixation (120) et le bord libre (122), la portion d'allongement (123) étant inclinée par rapport à la deuxième portion de rigidification (115).

2. Brise-lames (1) selon la revendication 1, dans lequel la portion d'allongement (123) de chaque pied (12) est inclinée de 90° plus ou moins 15° par rapport à la deuxième portion de rigidification (115).

3. Brise-lames (1) selon la revendication 1 ou 2 dans lequel la deuxième portion de rigidification (115) forme un angle compris entre 85 et 120°, et de manière optimale sensiblement à 100° dans le deuxième pli (114) par rapport à la première portion de rigidification (113).

4. Brise-lames (1) selon l'une quelconque des revendications précédentes, dans lequel la deuxième portion de rigidification (115) comprend une largeur entre le deuxième pli (114) et le bord d'extrémité libre (115C), par exemple au moins deux à sept fois moins, à la largeur de la portion d'allongement (123).

5. Brise-lames (1) selon la revendication 4, dans lequel la première portion de rigidification (113) est courbe.

6. Brise-lames (1) selon la revendication 5, dans lequel chaque pied de raccordement (12) comprend une portion d'extension (124) s'étendant du bord de raccord (121) au bord périphérique de fixation (120) en longeant la forme de la paroi (11) du brise-lames (1).

7. Brise-lames (1) selon la revendication 6, dans lequel la portion d'extension (124) du pied de raccordement (12) comprend un premier et un deuxième pli formant le prolongement du premier et du deuxième pli.

8. Citerne pour le transport de produits liquides comprenant une cuve (2) comprenant un compartiment de stockage et au moins une première paire de brise-lames (1A) comprenant deux brise-lames (1) selon l'une quelconque des revendications précédentes, dans lequel le plat de répartition (10) de chaque brise-lames (1) est fixé à une surface interne de la cuve (2) et en ce que les deux brise-lames (1) de chaque paire brise-lames sont orientés dans un même plan perpendiculaire à l'axe de la citerne et en ayant les portions d'extension (124) des pieds de raccordement (12) de chaque brise-lames (1) d'une paire brise-lames (1A) inclinées l'une par rapport à l'autre en formant un angle supérieur à 85° et inférieur à 120°, en particulier 100°.

9. Citerne selon la revendication précédente, dans laquelle la cuve (2) comprend une première, une deuxième, une troisième et une quatrième ouverture de lavage (23A, 23B, 23C, 23D) alignées axialement suivant un ordre de l'avant de la cuve (2) à l'arrière de la cuve (2) et en ce que la citerne comprend une première, une deuxième, une troisième et une quatrième paire de brise-lames (1A, 1B, 1C, 1D) alignées axialement suivant un ordre de l'avant de la cuve (2) à l'arrière de la cuve (2), et en ce que :
- la première paire brise-lames (1A) est située axialement entre la première ouverture (23A) et la deuxième ouverture (23B) et comprend la face concave (111A) de chaque brise-lames (1) en regard de l'avant,
- la deuxième paire brise-lames (1B) est située axialement au niveau de la deuxième ouverture (23B) et comprend la face concave (111A) de chaque brise-lames (1) en regard de l'avant,
- la troisième paire brise-lames (1C) est située axialement au niveau de la troisième ouverture (23C) et comprend la face concave (11A) de chaque brise-lames (1) en regard de l'arrière,
- la quatrième paire brise-lames (1D) est située axialement entre la troisième (23C) et la quatrième ouverture (23D) et comprend la face concave (111A) de chaque brise-lames (1) en regard de l'arrière.

10. Citerne selon la revendication 8 ou 9, dans laquelle la citerne comprend une ouverture de lavage par paire de brise-lames et en ce que chaque paire de brise-lames est agencée dans la citerne par rapport aux ouvertures de lavage telle que la surface interne de la cuve (2) et les surfaces des brise-lames (1) sont entièrement accessibles à partir d'au moins une projection d'un axe vertical d'une des ouvertures.

## Patentansprüche

1. Schallwand (1) eines Tanks für den Transport von flüssigen oder pulverförmigen Produkten, umfassend:
- eine Verteilerplatte (10), die an einem Becken (2) des Tanks zu befestigen ist,
- eine Schallwandung (11), umfassend:
∘ einen Hauptabschnitt (111), umfassend eine konkave Fläche (111A) und eine konvexe Fläche (111B) und einen umlaufenden Rand (111C), der deutlich lotrecht zur Verteilerplatte (10) befestigt ist,
∘ einen ersten Knick (112), wobei der Hauptabschnitt (111) vom umlaufenden Rand (111C) und vom ersten Knick (112) begrenzt ist, wobei der erste Knick (112) eine konkave Fläche (112A) umfasst, die sich von der konkaven Fläche (111B) des Hauptabschnitts (111) erstreckt, und gegenüber einer konvexen Fläche (111B), die sich von der konkaven Fläche (111A) des Hauptabschnitts (111) erstreckt,
∘ einen ersten Versteifungsabschnitt (113), der sich vom ersten Knick (112) erstreckt, wobei der erste Knick (112) zwischen dem Hauptabschnitt (111) und dem ersten Versteifungsabschnitt (113) gebildet ist, wobei die Schallwand **dadurch gekennzeichnet ist, dass**:
die Schallwandung darüber hinaus umfasst:
∘ einen zweiten Knick (114), umfassend eine konkave Fläche (114A) der Seite (A) der konkaven Fläche (111A) des Hauptabschnitts (111) und eine konvexe Fläche (114B) der Seite (B) der konvexen Fläche (114B) des Hauptabschnitts (111),
∘ einen zweiten Versteifungsabschnitt (115), der sich vom zweiten Knick (114) erstreckt, wobei sich der zweite Knick (114) zwischen dem ersten Versteifungsabschnitt (113) und dem zweiten Versteifungsabschnitt (115) erstreckt, wobei der zweite Versteifungsabschnitt (115) einen freien Endrand (115C) der Schallwand (1) umfasst und die Schallwand zwei Versteifungsfüße (12) umfasst, die jeweils umfassen:
∘ einen umlaufenden Befestigungsrand (120), der an der Verteilerplatte (10) befestigt ist,
∘ einen Anschlussrand (121), der an der Schallwandung (11) befestigt ist,
∘ einen freien Rand (122) zwischen dem umlaufenden Befestigungsrand (120) und dem Anschlussrand (121),
∘ wenigstens einen Verlängerungsabschnitt (123), der zwischen dem umlaufenden Befestigungsrand (120) und dem freien Rand (122) angeordnet ist, wobei der Verlängerungsabschnitt (123) in Bezug auf den zweiten Versteifungsabschnitt (115) geneigt ist.

2. Schallwand (1) gemäß Anspruch 1, bei der der Verlängerungsabschnitt (123) jedes Fußes (12) um 90 °, plus minus 15 °, in Bezug auf den zweiten Versteifungsabschnitt (115) geneigt ist.

3. Schallwand (1) gemäß Anspruch 1 oder 2, bei der der zweite Versteifungsabschnitt (115) einen zwischen 85 und 120 ° inbegriffenen und optimalerweise deutlich 100 ° betragenden Winkel im zweiten Knick (114) in Bezug auf den ersten Versteifungsabschnitt (113) bildet.

4. Schallwand (1) gemäß irgendeinem der voranstehenden Ansprüche, bei der der zweite Versteifungsabschnitt (115) eine Breite zwischen dem zweiten Knick (114) und dem freien Endrand (115C) umfasst, der zum Beispiel wenigstens das Zweifache bis wenigstens das Siebenfache der Breite des Verlängerungsabschnitts (123) beträgt.

5. Schallwand (1) gemäß Anspruch 4, bei der der erste Versteifungsabschnitt (113) krumm ist.

6. Schallwand (1) gemäß Anspruch 5, bei der jeder Anschlussfuß (12) einen Erweiterungsabschnitt (124) umfasst, der sich vom Anschlussrand (121) zum umlaufenden Befestigungsrand (120) erstreckt und dabei an der Form der Wandung (11) der Schallwand (1) entlangläuft.

7. Schallwand (1) gemäß Anspruch 6, bei der der Erweiterungsabschnitt (124) des Anschlussfußes (12) einen ersten und einen zweiten Knick umfasst, die die Verlängerung des ersten und des zweiten Knicks bilden.

8. Tank für den Transport von flüssigen Produkten, umfassend ein Becken (2), umfassend ein Lagerungsfach und wenigstens ein erstes Paar Schallwände (1A), umfassend zwei Schallwände (1) gemäß irgendeinem der voranstehenden Ansprüche, bei dem die Verteilerplatte (10) jeder Schallwand an einer internen Oberfläche des Beckens (2) befestigt ist und dass die zwei Schallwände (1) jedes Paars Schallwände in einer und derselben Ebene ausgerichtet sind, die lotrecht zur Achse des Tanks ist, und dass sie Erweiterungsabschnitte (124) der Anschlussfüße (12) jeder Schallwand (1) eines Paars Schallwände (1A) aufweisen, die in Bezug zueinander geneigt sind, indem sie einen Winkel bilden, der größer als 85 ° und kleiner als 120 °, insbesondere 100 ° ist.

9. Tank gemäß dem voranstehenden Anspruch, bei dem das Becken (2) eine erste, eine zweite, eine dritte und eine vierte Waschöffnung (23A, 23B, 23C, 23D) umfasst, die gemäß einer Reihenfolge von vor dem Becken (2) bis hinter dem Becken (2) axial aufgereiht sind und dass der Tank ein erstes, ein zweites, ein drittes und ein viertes Paar Schallwände (1A, 1B, 1C, 1D) umfasst, die gemäß einer Reihenfolge von vor dem Becken (2) bis hinter dem Becken (2) axial aufgereiht sind und dass:
- das erste Paar Schallwände (1A) axial zwischen der ersten Öffnung (23a) und der zweiten Öffnung (23B) angeordnet ist und die konkave Fläche (111A) jeder Schallwand (1) gegenüber der Vorderseite umfasst,
- das zweite Paar Schallwände (1B) axial an der zweiten Öffnung (23B) angeordnet ist und die konkave Fläche (111A) jeder Schallwand (1) gegenüber der Vorderseite umfasst,
- das dritte Paar Schallwände (1C) axial an der dritten Öffnung (23C) angeordnet ist und die konkave Fläche (111A) jeder Schallwand (1) gegenüber der Hinterseite umfasst,
- das vierte Paar Schallwände (1D) axial zwischen der dritten (23C) und der vierten Öffnung (23D) angeordnet ist und die konkave Fläche (111A) jeder Schallwand (1) gegenüber der Hinterseite umfasst.

10. Tank gemäß Anspruch 8 oder 9, bei dem der Tank eine Waschöffnung per Paar Schallwände umfasst und dass jedes Paar Schallwände in dem Tank in Bezug auf die Waschöffnungen derart angeordnet ist, dass die innere Oberfläche des Beckens (1) und die Oberflächen der Schallwände (1) ausgehend von wenigstens einer Projektion einer vertikalen Achse einer der Öffnungen vollständig zugänglich sind.

## Claims

1. A breakwater (1) of a tank for transporting liquid or powdery products, comprising:
- a distribution plate (10) to be fastened to a vessel (2) of the tank,
- a breakwater wall (11) comprising:
o a main portion (111) comprising a concave face (111A) and a convex face (111B) and a peripheral edge (111C) fastened substantially perpendicular to the distribution plate (10),
o a first fold (112), the main portion (111) being delimited by the peripheral edge (111C) and the first fold (112), the first fold (112) comprising a concave face (112A) extending from the convex face (111B) of the main portion (111) and opposite a convex face (112B) extending from the concave face (111A) of the main portion (111),
o a first rigidification portion (113) extending from the first fold (112), the first fold (112) being formed between the main portion (111) and the first rigidification portion (113), the breakwater being **characterised in that**:
the breakwater wall further comprises:
∘ a second fold (114) comprising a concave face (114A) on the side (A) of the concave face (111A) of the main portion (111) and a convex face (114B) on the side (B) of the convex face (111B) of the main portion (111),
o a second rigidification portion (115) extending from the second fold (114), the second fold (114) being formed between the first rigidification portion (113) and second rigidification portion (115), the second rigidification portion (115) comprising a free end edge (115C) of the breakwater (1), and the breakwater comprising two rigidification legs (12) each comprising:
o a peripheral fastening edge (120) fastened to the distribution plate (10),
o a connector edge (121) fastened to the breakwater wall (11),
o a free edge (122) between the peripheral fastening edge (120) and the connector edge (121),
o at least one elongation portion (123) located between the peripheral fastening edge (120) and the free edge (122), the elongation portion (123) being tilted relative to the second rigidification portion (115).

2. The breakwater (1) according to claim 1, wherein the elongation portion (123) of each leg (12) is tilted by 90° more or less 15° relative to the second rigidification portion (115).

3. The breakwater (1) according to claim 1 or 2, wherein the second rigidification portion (115) is at an angle of between 85 and 120°, and optimally substantially at 100° in the second fold (114) relative to the first rigidification portion (113).

4. The breakwater (1) according to any of the preceding claims, wherein the second rigidification portion (115) comprises a width between the second fold (114) and the free end edge (115C), for example at least two to seven times less than the width of the elongation portion (123).

5. The breakwater (1) according to claim 4, wherein the first rigidification portion (113) is curved.

6. The breakwater (1) according to claim 5, wherein each connection leg (12) comprises an extension portion (124) extending from the connector edge (121) to the peripheral fastening edge (120) running along the shape of the wall (11) of the breakwater (1).

7. The breakwater (1) according to claim 6, wherein the extension portion (124) of the connection leg (12) comprises a first and a second fold forming the extension of the first and second fold.

8. A tank for transporting liquid products comprising a vessel (2) comprising a storage compartment and at least one first pair of breakwaters (1A) comprising two breakwaters (1) according to any of the preceding claims, wherein the distribution plate (10) of each breakwater (1) is fastened to an inner surface of the vessel (2) and in that the two breakwaters (1) of each pair of breakwaters are oriented in a same plane perpendicular to the axis of the tank and by having the extension portions (124) of the connection legs (12) of each breakwater (1) of a pair of breakwaters (1A) tilted relative to each other being at an angle greater than 85° and lower than 120°, in particular 100°.

9. The tank according to the preceding claim, wherein the vessel (2) comprises a first, a second, a third and a fourth cleaning apertures (23A, 23B, 23C, 23D) axially aligned according to an order from the front of the vessel (2) to the rear of the vessel (2) and in that the tank comprises a first, a second, a third and a fourth pairs of breakwaters (1A, 1B, 1C, 1D) axially aligned according to an order of the front of the vessel (2) to the rear of the vessel (2), and in that:
- the first pair of breakwaters (1A) is axially located between the first aperture (23A) and the second aperture (23B) and comprises the concave face (111A) of each breakwater (1) facing the front,
- the second pair of breakwaters (1B) is axially located at the second aperture (23B) and comprises the concave face (111A) of each breakwater (1) facing the front,
- the third pair of breakwaters (1C) is axially located at the third aperture (23C) and comprises the concave face (111A) of each breakwater (1) facing the rear,
- the fourth pair of breakwaters (1D) is axially located between the third (23C) and fourth apertures (23D) and comprises the concave face (111A) of each breakwater (1) facing the rear.

10. The tank according to claim 8 or 9, wherein the tank comprises a cleaning aperture per pair of breakwaters and in that each pair of breakwaters is arranged in the tank relative to the cleaning apertures so that the inner surface of the vessel (2) and the surfaces of the breakwaters (1) are fully accessible from at least one projection of a vertical axis of one of the apertures.
